# EUROPÄISCHE PATENTANMELDUNG

(11) **EP 1 188 977 A1**
(43) Veröffentlichungstag der Anmeldung: **20.03.2002**
(21) Anmeldenummer: 00120453.6
(22) Anmeldetag: 19.09.2000
(51) Int. Cl.: F16L 33/00

(54) **Anschlussrohr für einen Schlauch**

(71) Anmelder: Siemens Building Technologies AG, 8008 Zürich (CH)
(72) Erfinder: Jandl, Josef, 6300 Zug (CH)
(74) Vertreter: Zedlitz, Peter, Dipl.-Inf.

(57) **Zusammenfassung**

Ein Anschlussrohr (1) für einen flexiblen Schlauch ist derart gestaltet, dass senkrecht zur Rohrachse (2) liegende Querschnittflächen des Anschlussrohrs (1) aussen oval begrenzt sind. Die ovalen Querschnittflächen des Anschlussrohrs (1) bewirken bei einem im Bereich (4) angeschlossenen ursprünglich runden Schlauch eine Verformung, welche bei einem Verdrehen des Schlauchs um die Rohrachse (2) mindestens teilweise plastisch ist, so dass sich der Schlauch nach einer leichten Drehung um die Rohrachse (2) problemlos entgegen der eingezeichneten Richtung des Pfeils R vom Anschlussrohr (1) entfernen lässt. Eine aus dem ovalen Anschlussrohr (2) und einem flexiblen Schlauch gebildete Schlauchverbindung ist ohne viel Aufwand mehrfach lösbar, ohne dass dabei ein unzulässiger Materialverschleiss verursacht würde.

## Beschreibung

Die Erfindung bezieht sich auf ein Anschlussrohr für einen Schlauch gemäss dem Oberbegriff des Anspruchs 1.

Solche Anschlussrohre eignen sich in der Fluidtechnik zum Anschliessen eines Schlauches an ein Gerät, beispielsweise an einen fluidischen Antrieb oder an einen Drucksensor oder auch zum Verbinden von Schläuchen.

Es ist ein Anschlussrohr dieser Art bekannt (US 4,603,890), welches kegelstumpfförmige Stufen aufweist durch welche ein elastischer Schlauch festgehalten wird. Die Verbindung zwischen dem Schlauch und dem Anschlussrohr kann mit einem Dichtungsring abgedichtet und mit einer Schelle oder Bride gesichert werden.

Es ist auch bekannt (EP 959 289 A1), am Anschlussrohr einen Flansch auszubilden, der als Anschlag für einen aufgeschobenen Schlauch einsetzbar ist.

Die bekannten Anschlussrohre haben den Nachteil, dass die Verbindung zwischen einem Schlauch und dem Anschlussrohr nur schlecht lösbar ist, wenn der Schlauch beim Lösen nicht beschädigt werden soll, da die kegelstumpfförmigen Stufen ein einfaches Abziehen des Schlauchs verhindern, was ja eigentlich auch ihrer Aufgabe entspricht. Im weiteren ist die Geometrie in relativ engen Grenzen auf den Innendurchmesser und die Elastizität der anzuschliessenden Schläuche abzustimmen, was in der Praxis of schwierig ist, wenn unterschiedliche Produkte für den Anschluss an ein gewisses Gerät in Frage kommen.

Der Erfindung liegt die Aufgabe zugrunde, ein Anschlussrohr für Schlauchverbindungen vorzuschlagen, die ohne viel Aufwand mehrfach lösbar sind, ohne dass dabei der ein unzulässiger Materialverschleiss verursacht wird.

Die genannte Aufgabe wird erfindungsgemäss durch die Merkmale des Anspruchs 1 gelöst. Weiterbildungen der Erfindung ergeben sich aus den abhängigen Ansprüchen.

Nachfolgend werden Ausführungsbeispiele der Erfindung anhand der Zeichnung näher erläutert.

Es zeigen:
- Fig. 1: ein Anschlussrohr in einer teilweise geschnittener Seitenansicht, einer teilweise geschnittenen Draufsicht und einer weiteren Seitenansicht,
- Fig. 2: eine Ausführungsvariante des Anschlussrohres in einer teilweise geschnittener Seitenansicht, einer teilweise geschnittenen Draufsicht und einer weiteren Seitenansicht,
- Fig. 3: ein Gerät der Fluidtechnik mit zwei Exemplaren des Anschlussrohrs, und
- Fig. 4: ein Verbindungselement der Fluidtechnik.

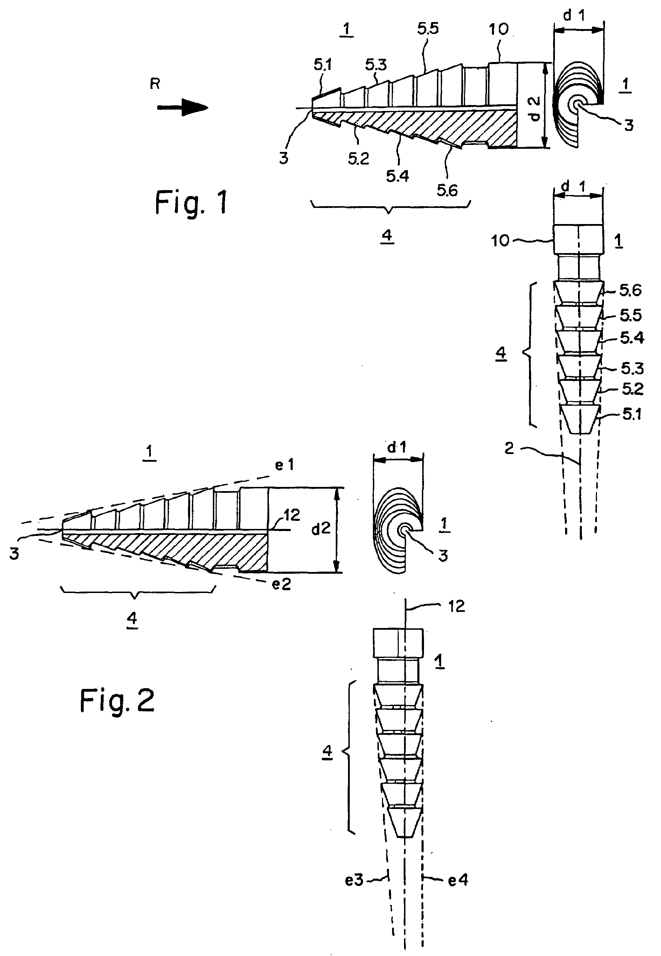

In der Fig. 1 bedeutet 1 ein Anschlussrohr für einen nicht dargestellten flexiblen Schlauch, welcher zur Herstellung einer leicht lösbaren Verbindung zwischen dem Schlauch und dem Anschlussrohr 1 in der Richtung eines Pfeils R auf das Anschlussrohr 1 schiebbar ist. Das Anschlussrohr 1 weist einen in einer Rohrachse 2 verlaufenden Durchlasskanal 3 für ein Fluid auf.

Gemäss der vorliegenden Erfindung sind senkrecht zur Rohrachse 2 liegende Querschnittflächen des Anschlussrohrs 1 aussen oval begrenzt. Die ovalen Querschnittsflächen weisen also einen grossen äusseren Durchmesser d2 und einen kleinen äusseren Durchmesser d1 auf.

In einem gewissen Bereich 4 des Anschlussrohrs 1, der zum Überstülpen des Schlauchs vorgesehen ist, ist mit Vorteil wenigstens eine als Widerhaken wirkende Stufe 5.1, 5.2, 5.3, 5.4, 5.5, 5.6 ausgebildet, welche mit Vorteil je die Form eines Kegelstumpfs oder eines abgestumpften Paraboloids aufweisen.

Damit das Anschlussrohr 1 für verschiedene Schlauchdurchmesser verwendbar ist, ist die äussere Form des Anschlussrohres 1 im Bereich 4 grundsätzlich konisch ausgeführt. Ein äusserer Durchmesser d2 und/oder d1 des Anschlussrohrs 1 nimmt also über den gewissen Bereich 4, der zum Überstülpen des Schlauchs vorgesehen ist, in der Richtung R, in welcher der Schlauch beim Anschliessen über das Anschlussrohr 4 schiebbar ist, im wesentlichen zu, sofern die allfällig ausgeführten Stufen 5.1, 5.2, 5.3, 5.4, 5.5, 5.6 bei dieser Betrachtung ausser Acht gelassen werden.

Das Anschlussrohr 1 dient als Leitungsstück mit geschlossenem Querschnitt, welches besonders geeignet ist für das Fördern von Fluiden. Es versteht sich von selbst, dass bei geeigneter Dimensionierung des Durchlasskanals 3 auch feste Stoffe, beispielsweise ein Granulat, durch das Anschlussrohr 1 förderbar sind.

Das Anschlussrohr 1 ist insbesondere in der Fluidtechnik vielseitig einsetzbar. Je nach vorgesehenem Einsatz ist ein Ende 10 des Anschlussrohrs 1 funktionsgerecht gestaltet, indem beispielsweise ein Gewinde oder ein Flansch zum Befestigen des Anschlussrohrs 1 an einem Gerät ausgebildet ist. Es versteht sich von selbst, dass das Anschlussrohr 1 aber auch vorteilhaft direkt einstückig in einem Gehäuseteil oder an einer Einrichtung ausgebildet werden kann.

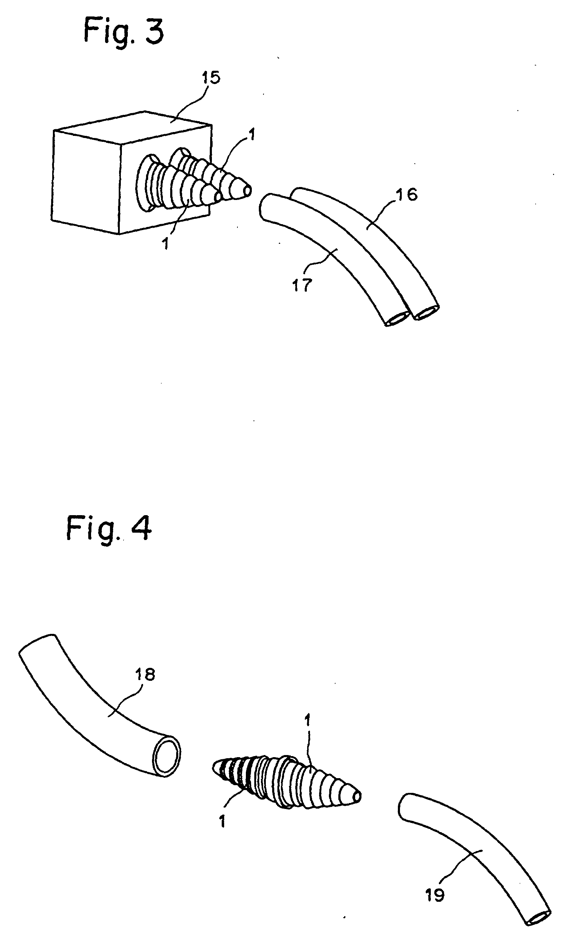

In der Fig. 3 weist ein Gerät 15 zwei Exemplare des ovalen Anschlussrohrs 1 auf. Das Gerät 15 ist beispielsweise ein Sensor zum Messen einer Druckdifferenz zwischen zwei Fluiden, welche in flexiblen Schläuchen 16 und 17 dem Gerät 15 zuführbar sind. Die beiden Schläuche 16 und 17 sind vorzugsweise rund und werden auf die ovalen Anschlussrohre 1 aufgeschoben.

Im weiteren sind zwei oder mehrere ovale Anschlussrohre 1 als Schlauchverbindungselemente zusammenfügbar, wobei 2 Ausführungen des Anschlussrohrs 1 - wie in der Fig. 4 dargestellt - als Schnellkupplung für zwei Schläuche 18 und 19, drei Ausführungen des Anschlussrohrs 1 als T-förmiges oder Y-förmiges Schlauchverbindungselement oder vier Ausführungen des Anschlussrohrs 1 als Kreuz-Verbindungselement für vier Schläuche zusammenfügbar sind, um einige Beispiele zu nennen.

Die senkrecht zur Rohrachse 2 liegenden ovalen Querschnittflächen des Anschlussrohrs 1 bewirken bei einem im Bereich 4 angeschlossenen ursprünglich runden Schlauch eine Verformung, welche bei einem Verdrehen des Schlauchs um die Rohrachse 2 mindestens teilweise plastisch ist, so dass sich der Schlauch nach einer leichten Drehung um die Rohrachse 2 problemlos entgegen der eingezeichneten Richtung des Pfeils R vom Anschlussrohr 1 entfernen lässt.

Die äussere Form der besagten ovalen Querschnittflächen des Anschlussrohrs 1 kann in relativ weiten Grenzen variieren, wobei die Grenzen im Wesentlichen von der Verformbarkeit und dem Innendurchmesser des Schlauchs, dem erwarteten Druck des Fluids und der erforderlichen Sicherheit abhängen. Gute Funktionalität für Schläuche mit einem Innendurchmesser von etwa 4 mm und einem Druck bis 6 bar ist erreichbar, wenn die ovalen Querschnittflächen ellipsenförmig sind und das Verhältnis des kleinen äusseren Durchmessers d1 zum grossen äusseren Durchmesser d2 etwa 3:4 ist.

Sofern relativ weiche und gut verformbare Schläuche eingesetzt werden, kann das Verhältnis des kleinen äusseren Durchmessers d1 zum grossen äusseren Durchmesser d2 bis etwa 1:2 verkleinert und bei relativ kleinem Druck im Fluid bis etwa 9:10 vergrössert werden.

Eine aus dem vorgeschlagenen ovalen Anschlussrohr 2 und dem flexiblen Schlauch mit dem runden Innenquerschnitt gebildete Schlauchverbindung ist ohne viel Aufwand mehrfach lösbar, ohne dass dabei ein unzulässiger Materialverschleiss verursacht würde.

Bei Bedarf ist die Verbindung zwischen dem Schlauch und dem Anschlussrohr 1 zusätzlich mit einem Dichtungsring abgedichtet und mit einer Schelle oder Bride gesichert.

Eine erfindungsgemässe Ausführung des ovalen Anschlussrohrs 1 ist nicht notwendigerweise symmetrisch zum Durchlasskanal 3 aufgebaut. In einer in der Fig. 2 dargestellten Ausführungsvariante liegt der Durchlasskanal 3 auf einer Achse 12, welche wohl gemäss einer ersten Seitenansicht in der Fig. 2 symmetrisch zwischen gestrichelt dargestellten Geraden e1 und e2 liegt, welche den Bereich 4 über den grösseren äusseren Durchmesser d2 einhüllen. Gemäss einer zweiten Seitenansicht in der Fig. 2 liegt die Achse 12 jedoch nicht symmetrisch zwischen weiteren gestrichelt dargestellten Geraden e3 und e4, welche den Bereich 4 über den kleineren äusseren Durchmesser d1 einhüllen.

Die Ausführungsvariante nach Fig. 2 ermöglicht die Anordnung von zwei Anschlussrohren 1 relativ nahe nebeneinander, wenn beispielsweise an einem Gerät zwei Öffnungen für die Anschlussrohre 2 mit geringem Abstand vorgegeben sind.

## Patentansprüche

1. Anschlussrohr für einen Schlauch, **dadurch gekennzeichnet, dass** senkrecht zur Rohrachse (2; 12) liegende Querschnittflächen des Anschlussrohrs (1) aussen oval begrenzt sind.

2. Anschlussrohr nach Anspruch 1, **dadurch gekennzeichnet , dass** ein äusserer Durchmesser (d1; d2) des Anschlussrohrs (1) über einen gewissen Bereich (4), der zum Überstülpen des Schlauchs vorgesehen ist, in der Richtung (R), in welcher der Schlauch beim Anschliessen über das Anschlussrohr (1) schiebbar ist, im wesentlichen zunimmt.

3. Anschlussrohr nach einem der vorangehenden Ansprüche, **gekennzeichnet durch** eine als Widerhaken wirkende Stufe (5.1; 5.2; 5.3; 5.4; 5.5; 5.6).

4. Gerät der Fluidtechnik, mit einem Anschlussrohr (1) für einen Schlauch, **dadurch gekennzeichnet, dass** senkrecht zur Rohrachse (2; 12) liegende Querschnittflächen des Anschlussrohrs (1) aussen oval begrenzt sind.

5. Verbindungselement der Fluidtechnik, mit einem Anschlussrohr (1) für einen Schlauch, **dadurch gekennzeichnet, dass** senkrecht zur Rohrachse liegende Querschnittflächen des Anschlussrohrs (1) aussen oval begrenzt sind.
